# EUROPEAN PATENT SPECIFICATION

(11) **EP 3 739 369 B1**
(45) Date of publication and mention of the grant of the patent: **20.11.2024**
(21) Application number: 20174006.5
(22) Date of filing: 12.05.2020
(51) Int. Cl.: G02B 6/44

(54) **OPTICAL JUNCTION OR DISTRIBUTION BOX AND FIBER ROUTING INSERT**
OPTISCHER ANSCHLUSS- ODER VERTEILERKASTEN UND FASERFÜHRUNGSEINSATZ
JONCTION OPTIQUE OU BOÎTE DE DISTRIBUTION ET INSERT DE ROUTAGE DE FIBRES

(30) Priority: 17.05.2019 IT 201900006982
(43) Date of publication of application: 18.11.2020
(73) Proprietor: Prysmian S.p.A., 20126 Milano (IT)
(72) Inventor: PADDICK, Nathan, 20126 Milano (IT)
(74) Representative: Perani & Partners S.p.A.

(56) References cited:
- WO-A1-03/089973
- WO-A1-2008/033997
- US-A1- 2007 127 201
- US-A1- 2009 290 844
- US-A1- 2013 243 386

## Description

### Field of the invention

The present invention relates to the field of equipment and components for the installation of optical cables in optical access networks. In particular, the present invention relates to an optical junction or distribution box and a fiber routing insert for an optical junction or distribution box.

### Background of the invention

A FTTH ("Fiber To The Home") network is an optical access network providing a number of end customers with broadband communication services from operators, i.e. with services requiring data transmission at a very high rate, for example of some Mbit/s.

Typically, a FTTH network comprises multiple junction or distribution boxes or cabinets which cooperate with an access network and which may be installed in or near the basement of the building where end users reside, in an underground pit, on a wall, or on a pole. Optical cables exiting the junction or distribution boxes can be routed directly to the customer or to further junction or distribution boxes, for example arranged at different floors of the building.

An installed optical junction or distribution box may be opened for example for maintenance issues or for changing some fiber connections therein. During such operations there is a significant risk of fiber damage, especially in case of multiple intersecting fibers incoming the box from many optical ports.

WO 2012/0746288 discloses a fiber organizer for insertion into an optical junction or distribution box. The organizer has a planar base with a spool structure for storage of fibers. Moreover, superimposed splice trays are hinged to a tray holding section formed integrally with the base. Fiber ramps of the tray holding section are shaped to route optical fibers to the different trays along respective fiber channels. Accordingly, the fibers in the splice trays are accessible individually without disturbing the other fibers. However, incoming and outgoing fibers in the areas out of the splice trays are still arranged with intersecting paths.

WO 2008/033997 discloses a fiber management system where the fibers are arranged on two different floors and in splice trays mounted to the higher floor. Most of the lower floor can be accessed only by rotating away the whole higher floor, with all the splice trays lying thereon. This operation is cumbersome and may cause high mechanical stress to the fibers.

WO 03/089973, US 2009/290844, US 2007/127201 show other known examples of fiber management systems where the fibers are arranged on floors at different heights and are routed between the floors through inclined ramps.

### Summary of the invention

The Applicant has tackled the problem of reducing fiber intersections within an optical junction or distribution box, whereby fiber routing inside the box can be modified with a reduced risk of fiber damage.

The Applicant has found a fiber routing insert for an optical junction or distribution box having a first floor, a raised second floor and an inclined channel joining the first floor and the second floor. Optical fibers, for example entering the box from a derivation cable, may be guided along a first path on the first floor. Then, the fibers may be guided along an inclined path defined by the channel, without crossing with other fiber sections within the first path. Thereafter, the fibers are guided along a second path on the second floor and may exit the box and be fed to drop cables without returning to the first floor. Splice trays are rotatably connected to the second floor. The first floor can be accessed by just rotating up the splice trays, thereby leaving clear a tray opening formed in the second floor. There is no need instead to rotate the whole second floor.

Therefore, one aspect of the present invention relates to a fiber routing insert for an optical junction or distribution box, comprising a first floor and a second floor, the second floor being arranged at a raised position relative to the first floor. The insert further comprises first guide elements formed on the first floor, the first guide elements defining a first path configured to receive optical fibers, and second guide elements formed on the second floor, the second guide elements defining a second path configured to receive optical fibers. A channel is inclined to, and joins, the first floor and the second floor, the channel defining an inclined path configured to receive and guide optical fibers between the first path and the second path. The insert comprises one or more splice trays, each splice tray comprising two fiber access openings and third guide elements defining a third path configured to receive and guide optical fibers between said fiber access openings. The second floor has a tray opening for accessing to the first floor, at least one splice tray being rotatably connected to the second floor for engaging and clearing the tray opening.

Preferably, a gap is formed between the first floor and the channel, and the first path has a crossing portion extending through the gap.

Preferably, the channel has a first end portion connected to the first floor, a second end portion connected to the second floor, and a bridge portion between the first end portion and the second end portion, wherein the gap is formed between the first floor and the bridge portion.

Preferably, the first guide elements are shaped at the crossing portion to guide optical fibers along a crossing direction, and the channel is configured to guide optical fibers transversally to the crossing direction.

Preferably, the channel comprises a channel floor having two channel side edges, and channel walls arranged along the channel side edges for retaining optical fibers within the inclined path.

Preferably, a plurality of splice trays are arranged at a plurality of tray levels, a ramp element is partitioned in a plurality of tray connecting paths configured to receive distinct optical fibers, and the tray connecting paths extends between a common collecting portion of the first path or the second path and distinct fiber access openings at distinct tray levels.

Preferably, the second path extends at least partially around the tray opening.

Preferably, each splice tray is rotatable relative to the second floor between a lowered position proximate to the first floor and a raised position distal from the first floor.

Preferably, said at least one splice tray engages the tray opening in the lowered position and clears the tray opening in the raised position.

Preferably, said at least one splice tray is flush with the second floor in the lowered position.

Preferably, the first guide elements comprise first guide walls projecting from the first floor and arranged along the first path, and the second guide elements comprise second guide walls projecting from the second floor and arranged along the second path.

Preferably, the first floor and second floor are formed integrally in one piece.

Under another aspect, the invention relates to an optical junction or distribution box, comprising a first floor and a second floor arranged at a raised position relative to the first floor, and side walls surrounding the first floor and the second floor. First guide elements are formed on the first floor, the first guide elements defining a first path configured to receive optical fibers, and second guide elements are formed on the second floor, the second guide elements defining a second path configured to receive optical fibers. One or more first optical ports are formed in the side walls, each first optical port providing a fiber access to the first path, and one or more second optical ports are formed in the side walls, each second optical port providing a fiber access to the second path. A channel is inclined to, and joins, the first floor and the second floor, the channel defining an inclined path configured to receive and guide optical fibers between the first path and the second path. The insert comprises one or more splice trays, each splice tray comprising two fiber access openings and third guide elements defining a third path configured to receive and guide optical fibers between said fiber access openings. The second floor has a tray opening for accessing to the first floor, at least one splice tray being rotatably connected to the second floor for engaging and clearing the tray opening.

### Brief description of the drawings

The present invention will now be described in more detail hereinafter with reference to the accompanying drawings, in which embodiments of the invention are shown.
FIG. 1 is a perspective view of an optical junction or distribution box containing an insert according to one embodiment of the invention, having trays in a raised position;
FIG. 2 is a perspective view of the box of figure 1, having trays in a lowered position, where some optical fiber portions are schematically represented;
FIG. 3 is a front view of the insert and cable glands of the box of figure 1, without splice trays, where some optical fiber portions are schematically represented; and
FIG. 4 is top view of the box of figure 1, where some optical fiber portions are schematically represented.

### Detailed description

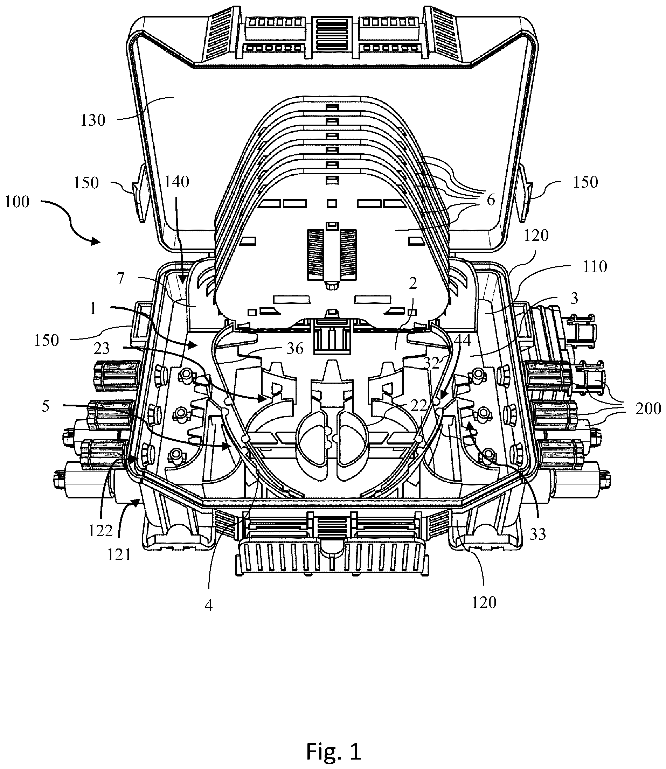

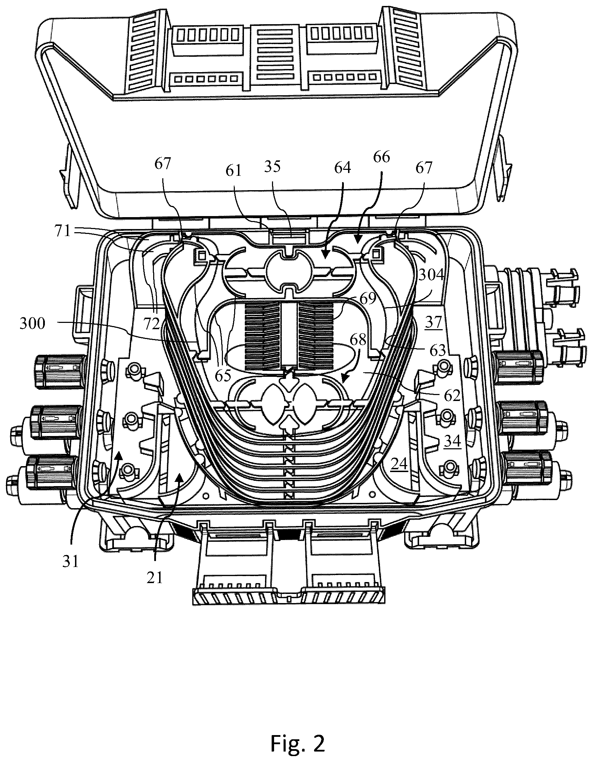

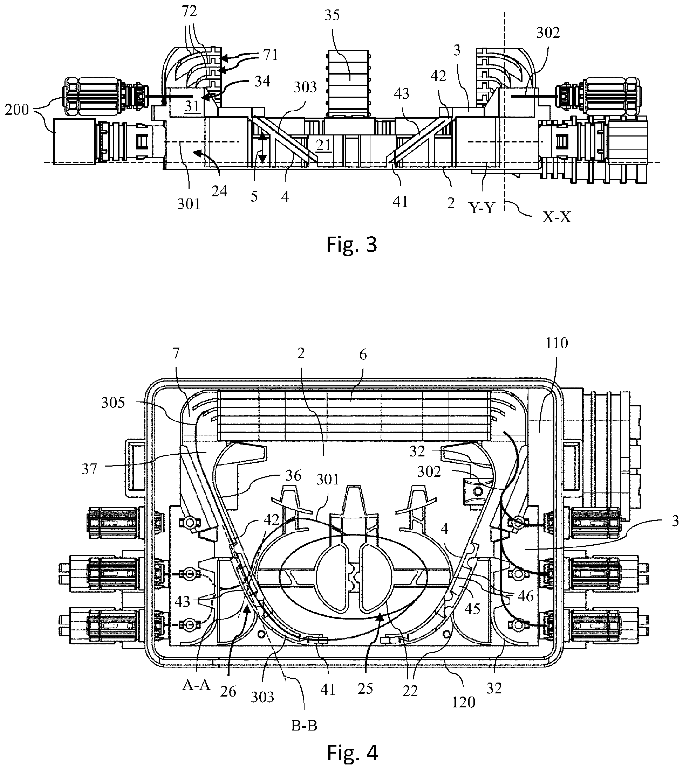

Figures 1-2 and 4 shows an optical junction or distribution box 100 and a fiber routing insert 1 within the optical junction or distribution box 100. In figure 3, the fiber routing insert 1 is isolated from the optical junction or distribution box 100.

The insert 1 comprises a first floor 2 and a second floor 3. The first floor 2 and the second floor 3 are fixed together, and in the preferred embodiment they are integrally formed in one piece. Such piece, as well as the whole insert 1, is preferably made of a plastic or metallic material.

The second floor 3 is arranged at a raised position relative to the first floor 2. In detail, the first floor 2 and the second floor 3 are spaced apart along a first direction X-X. Preferably, the first floor 2 and the second floor 3 are substantially planar and are arranged perpendicular to the first direction X-X. The first floor 2 is contoured by a first floor edge, and the second floor 3 is contoured by a second floor edge.

Moreover, the insert 1 and/or the optical junction or distribution box 100 as a whole can be symmetric about a central plane, which is substantially perpendicular to the first floor 2 and second floor 3, i.e. parallel to the first direction X-X.

Accordingly, a first routing volume 21 is defined between the first floor 2 and the second floor 3. Moreover, a second routing volume 31 is defined above the second floor 3, i.e. adjacent to the second floor 3 and opposite to the first routing volume 21 with respect to the second floor 3. In other words, the second floor 3 is arranged between the first routing volume 21 and the second routing volume 31.

The optical junction or distribution box 100 comprises a base 110, side walls 120 surrounding the base 110, and a cover 130. The base 110 and the side walls 120 define an open compartment 140. Fastening elements 150 are configured to removably fasten the cover 130 on top of the side walls 120, i.e. opposite to the base 110, for closing the compartment 140.

In the embodiment of the figures, the fiber routing insert 1 is housed in the compartment 140, with the first floor 2 laying on the base 110, and the side walls 120 surrounding the first floor 2 and the second floor 3. When the cover 130 is fastened on top of the side walls 120, the second routing volume 31 is arranged between the second floor 3 and the cover 130.

However, in further embodiments which are not shown in the figures, the first floor 2 and the second floor 3 can be formed integrally with the base 110 and the side walls 120. Specifically, the first floor 2 may define the base 110 of the junction or distribution box 100. In such embodiments, a fiber routing insert 1 as described herewith is not required, but the same components as described for the insert 1 shall be present in the junction or distribution box 100.

Therefore, for simplicity the invention will be described in the following referring mainly to the fiber routing insert 1. However, the features of the fiber routing insert 1 shall be intended as applicable also to a junction or distribution box 100 as a whole.

The optical junction or distribution box 100 comprises one or more first optical ports 121 and one or more second optical ports 122 formed in the side walls 120. Each first optical port 121 is arranged to provide an optical fiber access to the first routing volume 21, and similarly each second optical ports 122 is arranged to provide an optical fiber access to the second routing volume 31.

In detail, each first optical port 121 is arranged, referring to the first direction X-X, between the first floor 2 and the second floor 3. Moreover, the second floor 3 is arranged, referring to the first direction X-X, between the one or more first optical port 121 and the one or more second optical ports 122.

In the preferred embodiment, two arrays of first optical ports 121 are formed in opposite side walls 120 and are spaced apart in a second direction Y-Y perpendicular to the first direction X-X. Similarly, two arrays of second optical ports 122 are formed in opposite side walls 120 and are spaced apart in the second direction Y-Y. It shall be noted that the central plane, related to the symmetry of the insert 1 and the box 100, is perpendicular to the second direction Y-Y.

Each first optical port 121 and each second optical port 122 is configured for receiving an optical connector 200, such as an optical cable gland.

The fiber routing insert 1 comprises first guide elements 22 formed on the first floor 2 and second guide elements 32 formed on the second floor 3. The first guide elements 22 are arranged within the first routing volume 21, and the second guide elements 32 are arranged within the second routing volume 31. Some of the first guide elements 22 may extend, referring to the first direction X-X, from the first floor 2 to the second floor 3.

In the preferred embodiment the first guide elements 22 comprise first guide walls projecting from the first floor 2 in the first direction X-X, toward the second floor 3, and the second guide elements 32 comprise second guide walls projecting from the second floor 3 in the first direction X-X, away from the first floor 2.

The first guide elements 22 define a first path 23 configured to receive optical fibers 300, in detail a first fiber portion 301 of the optical fibers 300. In fact, the first guide elements 22 are arranged along the first path 23 and are shaped to guide the optical fibers 300 along the first path 23. Accordingly, the first path 23 extends on top of the first floor 2, i.e. within the first routing volume 21.

The first guide elements 22 may also define more than one first paths 23, for example two first paths 23 symmetric to each other. Moreover, each first path 23 can be branched, for enabling different arrangements of the optical fibers 300 or for spreading and recollecting different optical fibers 300 within the first routing volume 21. In any case, only one first path 23 will be described, with reference to all the first paths 23.

The first path 23 has a first path external end and a first path internal end. The first path external end is arranged adjacent to the first floor edge and/or to the side walls 120.

Moreover, the first path 23 comprises a first fiber access area 24 at the first path external end. The first guide elements 22 are shaped at the first fiber access area 24 to guide away from the first floor 2, i.e. out of the first routing volume 21, the optical fibers 300 within the first path 23.

Each first optical port 121 provides a fiber access to the first path 23 at the first fiber access area 24. Accordingly, the one or more first optical ports 121 are arranged adjacent the first fiber access area 24.

Preferably, the first path 23 further comprises a first fiber coil area 25. The first guide elements 22 comprise first fiber coil support members at the first fiber coil area 25. The first fiber coil support members are shaped to guide the optical fibers 300 along one or more loops.

The first fiber portion 301 of the optical fibers 300 extends from the first path external end, where the optical fibers 300 may be connected to optical connectors 200 at the first optical ports 121, to the first path internal end, by passing through the first fiber access area 24 and optionally through the first fiber coil area 25.

The second guide elements 32 define a second path 33 configured to receive optical fibers 300, in detail a second fiber portion 302 of the optical fibers 300. In fact, the second guide elements 32 are arranged along the second path 33 and are shaped to guide the optical fibers 300 along the second path 33. Accordingly, the second path 33 extends on top of the second floor 3, i.e. within the second routing volume 31.

The second guide elements 32 may also define more than one second paths 33, for example two second paths 33 symmetric to each other. Moreover, each second path 33 can be branched, for enabling different arrangements of the optical fibers 300 or for spreading and recollecting different optical fibers 300 within the second routing volume 31. In any case, only one second path 33 will be described, with reference to all the second paths 33.

The second path 33 has a second path external end and a second path internal end. The second path external end is arranged adjacent the second floor edge and/or the side walls 120.

Moreover, the second path 33 comprises a second fiber access area 34 at the second path external end. The second guide elements 32 are shaped at the second fiber access area 34 to guide away from the second floor 3, i.e. out of the second routing volume 31, the optical fibers 300 within the second path 33.

Each second optical port 122 provides a fiber access to the second path 33 at the second fiber access area 34. Accordingly, the one or more second optical ports 122 are arranged adjacent the second fiber access area 34.

The second fiber portion 302 of the optical fibers 300 extends from the second path external end, where the optical fibers 300 may be connected to optical connectors 200 at the second optical ports 122, to the second path internal end, preferably by passing through the second fiber access area 34. Further fiber passages along further paths may be provided between the second path external end and the second path internal end, as described in more detail below.

According to an aspect of the invention, a channel 4 joins the first floor 2 and the second floor 3. Preferably, the first floor 2 and the second floor 3 are joined fixedly by the channel 4. More preferably, the channel 4 is formed integrally in one piece with the first floor 2 and the second floor 3.

The channel 4 extends, referring to the first direction X-X, through the first routing volume 21. In more detail, the channel 4 is inclined to the first floor 2 and the second floor 3 and is also inclined to the first direction X-X.

The optical routing insert 1 and/or the optical junction or distribution box 100 may comprise more than one channel 4. For example, the figures show two channels 4 symmetric to each other. However, only one channel 4 will be described in the following with reference to each channel 4.

The channel 4 has a first end portion 41 connected to the first floor 2, a second end portion 42 connected to the second floor 3, and a bridge portion 43 between the first end portion 41 and the second end portion 42.

A gap 5 is formed between the channel 4, in particular the bridge portion 43, and the first floor 2. In fact, the bridge portion 43 is raised relative to the first floor 2. The gap 5 has a cross section which increases, as measured in the first direction X-X, from the first end portion 41 to the second end portion 42 of the channel 4.

The channel 4 defines an inclined path 44 configured to receive optical fibers 300, and in particular an inclined fiber portion 303 of the optical fibers 300. In fact, the channel 4 comprises a channel floor 45 for supporting optical fibers 300. The channel floor 45 has two channel side edges extending each from the first end portion 41 to the second end portion 42. Moreover, the channel 4 comprises channel walls 46 for retaining the optical fibers 300 within the inclined path 44. The channel walls 46 are arranged along the channel side edges and protrude from the channel floor 45 in the first direction X-X.

The inclined path 44 is configured to guide the optical fibers 300 between the first path 23 and the second path 33. In detail, the first end portion 41 of the channel 4 is arranged at the first path internal end, and the second end portion 42 of the channel 4 is arranged at the second path internal end.

Therefore, one and the same optical fiber 300, or distinct fibers connected in series, may be guided between a first optical port 121 and a second optical port 122 along the series of the first path 23, the inclined path 44 and the second path 33. Correspondingly, the first fiber portion 301, the inclined fiber portion 303 and the second fiber portion 302 can be identified sequentially. Further portions of the optical fibers 300 may optionally be identified along other paths within the optical junction or distribution box 100, as commented in a following part of the description.

Thanks to the channel 4, the first fiber access area 24 and the second fiber access area 34 can be arranged at different floors, and therefore some fiber intersections can be avoided.

In the preferred embodiment, the first path 23 has a crossing portion 26 extending through the gap 5 which is formed between the first floor 2 and the channel 4. Therefore, the channel 4 overpasses the first path 23 at the crossing portion 26, or in other words the channel 4 defines a flyover with respect to the crossing portion 26. Moreover, the first path 23 and the channel 4 crosses with grade separation. Accordingly, unnecessary fiber intersections are avoided.

It should be noted that the first guide elements 22 are shaped at the crossing portion 26 to guide the optical fibers 300 along a crossing direction A-A. Instead, the channel 4 is configured to guide the optical fibers 300 (at least within a section of the bridge portion 43 above the crossing portion 26) along a channel direction B-B which is transversal to the crossing direction A-A.

In the preferred embodiment, the insert 1 and/or the optical junction or distribution box 100 comprises one or more splice trays 6. Each splice tray 6 is rotatably connected to the first floor 2 and/or to the second floor 3, preferably to the second floor 3. In more detail, a tray support member 35 is formed on the second floor 3. Moreover, each splice tray 6 comprises a connecting member 61 for connection to the tray support member 35. The tray support member 35 project from the second floor in the first direction X-X away from the first floor 2.

The second floor 3 has a tray opening 36 for accessing along the first direction X-X to the first floor 2 and to the first routing volume 21. The second path 33 extends at least partially around the tray opening 36. In the embodiment of the figures, the tray opening 36 is spaced from the first fiber coil area 25 in the first direction X-X.

Preferably, each splice tray 6 is rotatable relative to the second floor 3 between a lowered position proximate to the first floor 2 and a raised position distal from the first floor 2. At least one splice tray 6 may engage the tray opening 36 in the lowered position and clear the tray opening 36 in the raised position. Accordingly, in the lowered position such splice tray 6 can be flush with the second floor 3. In the preferred embodiment a plurality of splice trays 6 are arranged, in the lowered position, at a plurality of tray levels which are spaced apart in the first direction X-X.

In detail, each splice tray 6 is rotatable around a tray axis extending in the second direction Y-Y. The tray axis preferably extends through the connecting member 61 of the tray 6.

Each splice tray 6 comprises a tray floor 62 contoured by tray side walls 63 surrounding a tray routing volume 64. The splice tray 6 further comprises third guide elements 65 formed on the tray floor 62. The third guide elements 65 are arranged within the tray routing volume 64. Moreover, the third guide elements 65 comprise third guide walls projecting from the tray floor 62 in the first direction X-X, when the splice tray 6 is in the lowered position.

The third guide elements 65 define one or more third paths 66 (optionally symmetric and/or branched) configured to receive optical fibers 300, in detail a third fiber portion 304 of the optical fibers 300. Referring to one splice tray and one third path 66, the third guide elements 65 are arranged along the third path 66 and are shaped to guide the optical fibers 300 along the third path 66. Accordingly, the third path 66 extends on top of the tray floor 62, i.e. within the third routing volume 64.

Each splice tray 6 further comprises two fiber access openings 67 formed in the side walls 63. The fiber access openings 67 are arranged to provide optical fiber accesses to the third routing volume 64, and in particular to the third path 66. In fact, the third path 66 is configured to guide the optical fibers 300 between the fiber access openings 67. Preferably, the tray axis extends through the fiber access openings 67. Thus, fiber stress is minimized during tray rotations.

The third path 66 extends between two third path ends at the fiber access openings 67. Preferably, the third path 66 further comprises a tray fiber coil area 68. The third guide elements 65 comprise tray fiber coil support members at the tray fiber coil area 68. The tray fiber coil support members are shaped to guide the optical fibers 300 along one or more loops.

Preferably, the splice tray 6 further comprises a splice support structure 69 within the third path 66 for supporting one or more fiber splices (not shown).

The third fiber portion 304 of the optical fibers 300 extends between the third path ends, where the optical fibers 300 may access the third routing volume 64 through the fiber access openings 67, preferably by passing through the tray fiber coil area 68 and/or through the splice support structure 69. It shall be noted that the third fiber portion 304 can be considered as a unitary fiber portion or as the union of two end fiber portions of distinct optical fibers 300 which are connected together by a fiber splice at the splice support structure 69.

Preferably, the insert 1 and/or the optical junction or distribution box 100 comprises a ramp element 7 formed on the first floor 2 or on the second floor 3, preferably on the second floor 3. The ramp element 7 has a top surface inclined to the first floor 2, to the second floor 3 and to the first direction X-X. Moreover, the ramp element 7 projects in the first direction X-X from the second floor 3.

In the embodiment of the figures, two (symmetric) ramp elements 7 are provided. The ramp elements 7 are spaced apart for receiving at least a portion of the one or more splice trays 6 therebetween. Optionally, the ramp elements 7 are aligned in the second direction X-X with the tray support member 35. However, in alternative embodiments one or both the ramp elements 7 may coincide with one or more tray support members 35. In other words, the one or more splice trays 6 can be connected to the second floor 3 through the one or more ramp elements 7.

In the preferred embodiment, the ramp element 7 is partitioned in a plurality of tray connecting paths 71 by one or more ramp guide elements 72 formed on the ramp element 7. The tray connecting paths 71 are configured to receive distinct optical fibers 300, in detail distinct ramp fiber portions 305.

The tray connecting paths 71 extend, and are configured to guide the distinct optical fibers 300, between a common collecting portion 37 of the first path 23 or the second path 33, preferably of the second path 33, and distinct fiber access openings 67 at distinct tray levels. Thereby, distinct optical fibers 300 within the second path 33 may be spread at the common collecting portion 37 between distinct tray connecting paths 71 of the ramp element 7. Then, the tray connecting paths 71 will guide distinct optical fibers 300 to distinct splice trays 6, at distinct fiber access openings 67.

This preferably happens at both the two fiber access openings 67 of each splice tray 6, i.e. at both the two ramp elements 7. Moreover, the second path may have two common collecting portions 37 corresponding to the two ramp elements 7. Therefore, the second path 33 can be divided in a first section from the second path internal end to a first common collecting portion 37, and a second section from a second common collecting portion 37 and the second path external end.

Therefore, in this embodiment one and the same optical fiber 300, or distinct fibers connected in series, may be guided between a first optical port 121 and a second optical port 122 along the first path 23, the inclined path 44, the first section of the second path 33, one of the tray connecting paths 71 of a first ramp element 7, the third path 66, one of the tray connecting paths 71 of a second ramp element 7, and the second section of the second path 33.

Correspondingly, the first fiber portion 301, the inclined fiber portion 303, a first section of the second fiber portion 302, a first ramp fiber portion 305, the third fiber portion 304, a second ramp fiber portion 305, and a second section of the second fiber portion 302 can be identified sequentially.

## Claims

1. A fiber routing insert (1) for an optical junction or distribution box (100), comprising:
- a first floor (2) and a second floor (3), the second floor (3) being arranged at a raised position relative to the first floor (2),
- first guide elements (22) formed on the first floor (2), the first guide elements (22) defining a first path (23) configured to receive optical fibers (300),
- second guide elements (32) formed on the second floor (3), the second guide elements (32) defining a second path (33) configured to receive optical fibers (300),
- a channel (4) inclined to, and joining the first floor (2) and the second floor (3), the channel (4) defining an inclined path (44) configured to receive and guide optical fibers (300) between the first path (23) and the second path (33),
- one or more splice trays (6), each splice tray (6) comprising two fiber access openings (67) and third guide elements (65) defining a third path (66) configured to receive and guide optical fibers (300) between said fiber access openings (67),
**characterized in that** the second floor (3) has a tray opening (36) for accessing to the first floor (2), at least one splice tray (6) being rotatably connected to the second floor (3) for engaging and clearing the tray opening (36).

2. The insert (1) of claim 1, wherein:
- a gap (5) is formed between the first floor (2) and the channel (4),
- the first path (23) has a crossing portion (26) extending through the gap (5).

3. The insert (1) of claim 2, wherein the channel (4) has a first end portion (41) connected to the first floor (2), a second end portion (42) connected to the second floor (3), and a bridge portion (43) between the first end portion (41) and the second end portion (42), wherein the gap (5) is formed between the first floor (2) and the bridge portion (43).

4. The insert (1) of claim 2 or 3, wherein:
- the first guide elements (22) are shaped at the crossing portion (26) to guide optical fibers (300) along a crossing direction (A-A),
- the channel (4) is configured to guide optical fibers (300) transversally to the crossing direction (A-A).

5. The insert (1) of any claim 1 to 4, wherein the channel (4) comprises:
- a channel floor (45) having two channel side edges,
- channel walls (46) arranged along the channel side edges for retaining optical fibers (300) within the inclined path (44).

6. The insert (1) of any claim 1 to 5, comprising:
- a plurality of splice trays (6) arranged at a plurality of tray levels,
- a ramp element (7) partitioned in a plurality of tray connecting paths (71) configured to receive distinct optical fibers (300), the tray connecting paths (71) extending between a common collecting portion (37) of the first path (23) or the second path (33) and distinct fiber access openings (67) at distinct tray levels.

7. The insert (1) of any claim 1 to 6, wherein the second path (33) extends at least partially around the tray opening (36).

8. The insert (1) of any claim 1 to 7, wherein each splice tray (6) is rotatable relative to the second floor (3) between a lowered position proximate to the first floor (2) and a raised position distal from the first floor (2).

9. The insert (1) of claim 8, wherein said at least one splice tray (6) engages the tray opening (36) in the lowered position and clears the tray opening (36) in the raised position.

10. The insert (1) of claim 8 or 9, wherein said at least one splice tray (6) is flush with the second floor (3) in the lowered position.

11. The insert (1) of any claim 1 to 10, wherein the first guide elements (22) comprise first guide walls projecting from the first floor (2) and arranged along the first path (23), and the second guide elements (32) comprise second guide walls projecting from the second floor (3) and arranged along the second path (33).

12. The insert (1) of any claim 1 to 11, wherein the first floor (2) and second floor (3) are formed integrally in one piece.

13. An optical junction or distribution box (100), comprising:
- a first floor (2) and a second floor (3) arranged at a raised position relative to the first floor (2),
- side walls (120) surrounding the first floor (2) and the second floor (3),
- first guide elements (22) formed on the first floor (2), the first guide elements (22) defining a first path (23) configured to receive optical fibers (300),
- second guide elements (32) formed on the second floor (3), the second guide elements (32) defining a second path (33) configured to receive optical fibers (300),
- one or more first optical ports (121) formed in the side walls (120), each first optical port (121) providing a fiber access to the first path (23),
- one or more second optical ports (122) formed in the side walls (120), each second optical port (122) providing a fiber access to the second path (33),
- a channel (4) inclined to, and joining, the first floor (2) and the second floor (3), the channel (4) defining an inclined path (44) configured to receive and guide optical fibers (300) between the first path (23) and the second path (33),
- one or more splice trays (6), each splice tray (6) comprising two fiber access openings (67) and third guide elements (65) defining a third path (66) configured to receive and guide optical fibers (300) between said fiber access openings (67),
**characterized in that** the second floor (3) has a tray opening (36) for accessing to the first floor (2), at least one splice tray (6) being rotatably connected to the second floor (3) for engaging and clearing the tray opening (36).

## Patentansprüche

1. Faserführungseinsatz (1) für einen optischen Abzweig- oder Verteilerkasten (100), umfassend: - eine erste Etage (2) und eine zweite Etage (3), wobei die zweite Etage (3) in einer erhöhten Position relativ zur ersten Etage (2) angeordnet ist,
- erste Führungselemente (22), die auf der ersten Etage (2) ausgebildet sind, wobei die ersten Führungselemente (22) einen ersten Pfad (23) definieren, der zur Aufnahme von optischen Fasern (300) konfiguriert ist,
- zweite Führungselemente (32), die auf der zweiten Etage (3) ausgebildet sind, wobei die zweiten Führungselemente (32) einen zweiten Pfad (33) definieren, der zur Aufnahme von optischen Fasern (300) konfiguriert ist,
- einen Kanal (4), der geneigt ist und die erste Etage (2) und die zweite Etage (3) verbindet, wobei der Kanal (4) einen geneigten Weg (44) definiert, der so konfiguriert ist, dass er optische Fasern (300) zwischen dem ersten Weg (23) und dem zweiten Weg (33) aufnimmt und führt,
- eine oder mehrere Spleißablagen (6), wobei jede Spleißablage (6) zwei Faserzugangsöffnungen (67) und dritte Führungselemente (65) umfasst, die einen dritten Weg (66) definieren, der so konfiguriert ist, dass er optische Fasern (300) zwischen den Faserzugangsöffnungen (67) aufnimmt und führt, **dadurch gekennzeichnet, dass** die zweite Etage (3) eine Fachöffnung (36) für den Zugang zur ersten Etage (2) aufweist, wobei mindestens eine Spleißablage (6) drehbar mit der zweiten Etage (3) verbunden ist, um in die Fachöffnung (36) einzugreifen und diese freizugeben.

2. Der Einsatz (1) nach Anspruch 1, wobei: - zwischen dem ersten Boden (2) und dem Kanal (4) ein Spalt (5) gebildet ist, - der erste Pfad (23) einen Kreuzungsabschnitt (26) aufweist, der sich durch den Spalt (5) erstreckt.

3. Faserführungseinsatz (1) nach Anspruch 2, wobei der Kanal (4) einen ersten Endabschnitt (41), der mit der ersten Etage (2) verbunden ist, einen zweiten Endabschnitt (42), der mit der zweiten Etage (3) verbunden ist, und einen Brückenabschnitt (43) zwischen dem ersten Endabschnitt (41) und dem zweiten Endabschnitt (42) aufweist, wobei der Spalt (5) zwischen der ersten Etage (2) und dem Brückenabschnitt (43) ausgebildet ist.

4. Faserführungseinsatz (1) nach Anspruch 2 oder 3, wobei:
- die ersten Führungselemente (22) an dem Kreuzungsabschnitt (26) so geformt sind, dass sie optische Fasern (300) entlang einer Kreuzungsrichtung (A-A) führen,
- der Kanal (4) so konfiguriert ist, dass er optische Fasern (300) quer zu der Kreuzungsrichtung (A-A) führt.

5. Faserführungseinsatz (1) nach einem der Ansprüche 1 bis 4, wobei der Kanal (4) umfasst:
- einen Kanalboden (45) mit zwei Kanalseitenkanten,
- Kanalwände (46), die entlang der Kanalseitenkanten angeordnet sind, um optische Fasern (300) innerhalb des geneigten Pfads (44) zu halten.

6. Faserführungseinsatz (1) nach einem der Ansprüche 1 bis 5, umfassend:
- eine Vielzahl von Spleißablagen (6), die in einer Vielzahl von Muldenebenen angeordnet sind,
- ein Rampenelement (7), das in eine Vielzahl von Muldenverbindungspfaden (71) unterteilt ist, die so konfiguriert sind, dass sie verschiedene optische Fasern (300) aufnehmen, wobei sich die Muldenverbindungspfade (71) zwischen einem gemeinsamen Sammelabschnitt (37) der ersten Bahn (23) oder der zweiten Bahn (33) und verschiedenen Faserzugangsöffnungen (67) auf verschiedenen Ebenen der Schale erstreckt.

7. Faserführungseinsatz (1) nach einem der Ansprüche 1 bis 6, wobei sich der zweite Pfad (33) zumindest teilweise um die Schalenöffnung (36) herum erstreckt.

8. Faserführungseinsatz (1) nach einem der Ansprüche 1 bis 7, wobei jede Spleißablage (6) relativ zur zweiten Etage (3) zwischen einer abgesenkten Position in der Nähe der ersten Etage (2) und einer angehobenen Position distal von der ersten Etage (2) drehbar ist.

9. Faserführungseinsatz (1) nach Anspruch 8, wobei die mindestens eine Spleißablage (6) in der abgesenkten Position in die Fachöffnung (36) eingreift und in der angehobenen Position die Fachöffnung (36) freigibt.

10. Faserführungseinsatz (1) nach Anspruch 8 oder 9, wobei die mindestens eine Spleißablage (6) in der abgesenkten Position mit der zweiten Etage (3) bündig ist.

11. Faserführungseinsatz (1) nach einem der Ansprüche 1 bis 10, wobei die ersten Führungselemente (22) erste Führungswände umfassen, die von der ersten Etage (2) vorstehen und entlang des ersten Weges (23) angeordnet sind, und die zweiten Führungselemente (32) zweite Führungswände umfassen, die von der zweiten Etage (3) vorstehen und entlang des zweiten Weges (33) angeordnet sind.

12. Faserführungseinsatz (1) nach einem der Ansprüche 1 bis 11, wobei die erste Etage (2) und die zweite Etage (3) in einem Stück geformt werden.

13. Optischer Anschluss- oder Verteilerkasten (100), umfassend:
- eine erste Etage (2) und eine zweite Etage (3), die in einer erhöhten Position relativ zur ersten Etage (2) angeordnet sind,
- Seitenwände (120), die die erste Etage (2) und die zweite Etage (3) umgeben,
- erste Führungselemente (22), die auf der ersten Etage (2) ausgebildet sind, wobei die ersten Führungselemente (22) einen ersten Pfad (23) definieren, der zur Aufnahme von optischen Fasern (300) konfiguriert ist,
- zweite Führungselemente (32), die auf der zweiten Etage (3) ausgebildet sind, wobei die zweiten Führungselemente (32) einen zweiten Pfad (33) definieren, der zur Aufnahme von optischen Fasern (300) konfiguriert ist,
- einen oder mehrere erste optische Anschlüsse (121), die in den Seitenwänden (120) ausgebildet sind, wobei jeder erste optische Anschluss (121) einen Faserzugang zu dem ersten Pfad (23) bereitstellt,
- einen oder mehrere zweite optische Anschlüsse (122), die in den Seitenwänden (120) ausgebildet sind, wobei jeder zweite optische Anschluss (122) einen Faserzugang zu dem zweiten Pfad (33) bereitstellt,
- einen Kanal (4), der zu der ersten Etage (2) und der zweiten Etage (3) geneigt ist und diese verbindet, wobei der Kanal (4) einen geneigten Weg (44) definiert, der so konfiguriert ist, dass er optische Fasern (300) zwischen dem ersten Weg (23) und dem zweiten Weg (33) aufnimmt und führt,
- eine oder mehrere Spleißablagen (6), wobei jede Spleißablage (6) zwei Faserzugangsöffnungen (67) und dritte Führungselemente (65) umfasst, die einen dritten Pfad (66) definieren, der so konfiguriert ist, dass er optische Fasern (300) zwischen den Faserzugangsöffnungen (67) aufnimmt und führt, **dadurch gekennzeichnet, dass** die zweite Etage (3) eine Ablageöffnung (36) für den Zugang zur ersten Etage (2) aufweist, wobei mindestens eine Spleißablage (6) drehbar mit der zweiten Etage verbunden ist (3) zum Einrasten und Freigeben der Fachöffnung (36).

## Revendications

1. Insert d'acheminement de fibre (1) pour une boîte de raccordement ou de distribution optique (100), comprenant :
- un premier étage (2) et un deuxième étage (3), le deuxième étage (3) étant agencé à une position élevée par rapport au premier étage (2),
- des premiers éléments de guidage (22) formés sur le premier étage (2), les premiers éléments de guidage (22) définissant un premier trajet (23) configuré pour recevoir des fibres optiques (300),
- des deuxièmes éléments de guidage (32) formés sur le deuxième étage (3), les deuxièmes éléments de guidage (32) définissant un deuxième trajet (33) configuré pour recevoir des fibres optiques (300),
- un canal (4) incliné vers et raccordant le premier étage (2) et le deuxième étage (3), le canal (4) définissant un trajet incliné (44) configuré pour recevoir et guider des fibres optiques (300) entre le premier trajet (23) et le deuxième trajet (33),
- un ou plusieurs plateaux d'épissure (6), chaque plateau d'épissure (6) comprenant deux ouvertures d'accès de fibre (67) et des troisièmes éléments de guidage (65) définissant un troisième trajet (66) configuré pour recevoir et guider des fibres optiques (300) entre lesdites ouvertures d'accès de fibre (67),
**caractérisé en ce que** le deuxième étage (3) présente une ouverture de plateau (36) pour accéder au premier étage (2), au moins un plateau d'épissure (6) étant relié de manière rotative au deuxième étage (3) pour venir en prise avec l'ouverture de plateau (36) et la dégager.

2. Insert (1) selon la revendication 1, dans lequel :
- un espace (5) est formé entre le premier étage (2) et le canal (4),
- le premier trajet (23) présente une partie de croisement (26) s'étendant à travers l'espace (5).

3. Insert (1) selon la revendication 2, dans lequel le canal (4) présente une première partie d'extrémité (41) reliée au premier étage (2), une deuxième partie d'extrémité (42) reliée au deuxième étage (3), et une partie de pont (43) entre la première partie d'extrémité (41) et la deuxième partie d'extrémité (42), dans lequel l'espace (5) est formé entre le premier étage (2) et la partie de pont (43).

4. Insert (1) selon la revendication 2 ou 3, dans lequel :
- les premiers éléments de guidage (22) sont formés au niveau de la partie de croisement (26) pour guider des fibres optiques (300) dans une direction de croisement (A-A),
- le canal (4) est configuré pour guider des fibres optiques (300) transversalement par rapport à la direction de croisement (A-A).

5. Insert (1) selon l'une quelconque des revendications 1 à 4, dans lequel le canal (4) comprend :
- un étage de canal (45) présentant deux bords latéraux de canal,
- des parois de canal (46) agencées le long des bords latéraux de canal pour retenir des fibres optiques (300) à l'intérieur du trajet incliné (44).

6. Insert (1) selon l'une quelconque des revendications 1 à 5, comprenant :
- une pluralité de plateaux d'épissure (6) agencés à une pluralité de niveaux de plateau,
- un élément de rampe (7) séparé en une pluralité de trajets de liaison de plateau (71) configurés pour recevoir des fibres optiques (300) distinctes, les trajets de liaison de plateau (71) s'étendant entre une partie de collecte commune (37) du premier trajet (23) ou du deuxième trajet (33) et des ouvertures d'accès de fibre (67) distinctes à des niveaux de plateau distincts.

7. Insert (1) selon l'une quelconque des revendications 1 à 6, dans lequel le deuxième trajet (33) s'étend au moins partiellement autour de l'ouverture de plateau (36).

8. Insert (1) selon l'une quelconque des revendications 1 à 7, dans lequel chaque plateau d'épissure (6) est rotatif par rapport au deuxième étage (3) entre une position abaissée à proximité du premier étage (2) et une position élevée distante du premier étage (2).

9. Insert (1) selon la revendication 8, dans lequel ledit au moins un plateau d'épissure (6) vient en prise avec l'ouverture de plateau (36) dans la position abaissée et dégage l'ouverture de plateau (36) dans la position élevée.

10. Insert (1) selon la revendication 8 ou 9, dans lequel ledit au moins un plateau d'épissure (6) est affleurant au deuxième étage (3) à la position abaissée.

11. Insert (1) selon l'une quelconque des revendications 1 à 10, dans lequel les premiers éléments de guidage (22) comprennent des premières parois de guidage faisant saillie du premier étage (2) et agencées le long du premier trajet (23), et les deuxièmes éléments de guidage (32) comprennent des deuxièmes parois de guidage faisant saillie du deuxième étage (3) et agencées le long du deuxième trajet (33).

12. Insert (1) selon l'une quelconque des revendications 1 à 11, dans lequel le premier étage (2) et le deuxième étage (3) sont formés d'un seul tenant.

13. Boîte de raccordement ou de distribution optique (100), comprenant :
- un premier étage (2) et un deuxième étage (3) agencé à une position élevée par rapport au premier étage (2),
- des parois latérales (120) entourant le premier étage (2) et le deuxième étage (3),
- des premiers éléments de guidage (22) formés sur le premier étage (2), les premiers éléments de guidage (22) définissant un premier trajet (23) configuré pour recevoir des fibres optiques (300),
- des deuxièmes éléments de guidage (32) formés sur le deuxième étage (3), les deuxièmes éléments de guidage (32) définissant un deuxième trajet (33) configuré pour recevoir des fibres optiques (300),
- un ou plusieurs premiers ports optiques (121) formés dans les parois latérales (120), chaque premier port optique (121) fournissant un accès de fibre au premier trajet (23),
- un ou plusieurs deuxièmes ports optiques (122) formés dans les parois latérales (120), chaque deuxième port optique (122) fournissant un accès de fibre au deuxième trajet (33),
- un canal (4) incliné vers et raccordant le premier étage (2) et le deuxième étage (3), le canal (4) définissant un trajet incliné (44) configuré pour recevoir et guider des fibres optiques (300) entre le premier trajet (23) et le deuxième trajet (33),
- un ou plusieurs plateaux d'épissure (6), chaque plateau d'épissure (6) comprenant deux ouvertures d'accès de fibre (67) et des troisièmes éléments de guidage (65) définissant un troisième trajet (66) configuré pour recevoir et guider des fibres optiques (300) entre lesdites ouvertures d'accès de fibre (67),
**caractérisé en ce que** le deuxième étage (3) présente une ouverture de plateau (36) pour accéder au premier étage (2), au moins un plateau d'épissure (6) étant relié de manière rotative au deuxième étage (3) pour venir en prise avec l'ouverture de plateau (36) et la dégager.
